# EUROPÄISCHE PATENTANMELDUNG

(11) **EP 3 251 515 A1**
(43) Veröffentlichungstag der Anmeldung: **06.12.2017**
(21) Anmeldenummer: 16172734.2
(22) Anmeldetag: 02.06.2016
(51) Int. Cl.: A23C 9/12, A23C 9/142, A23L 5/20, A23C 7/04

(54) **VERFAHREN ZUR HERSTELLUNG VON LACTOSEFREIEN MILCHPRODUKTEN**

(71) Anmelder: DMK Deutsches Milchkontor GmbH, 27404 Zeven (DE)
(72) Erfinder: DÖRING, Sven-Rainer, 27404 Zeven (DE); OEHLCKERS, Thorben, 21244 Buchholz (DE); ASCHEMANN, Jan, 30449 Hannover (DE)
(74) Vertreter: Fabry, Bernd

(57) **Zusammenfassung**

Vorgeschlagen wird ein Verfahren zur Herstellung von lactosefreien Milchprodukten, umfassend die folgenden Schritte:
(a) Ultrafiltration einer Ausgangsmilch zur Erzeugung eines ersten Permeats P1 und eines ersten Retentats R1;
(b) Umkehrosmose des ersten Permeats P1 zur Erzeugung eines zweiten Permeats P2 und eines zweiten Retentats R2;
(c) Vermischen des ersten Retentats R1 mit jeweils einer solchen Menge des zweiten Permeats P2 und Milchmineralien, so dass ein standardisiertes Milchprodukt erhalten wird, dessen Gehalt an Proteinen und Mineralien dem der Ausgangsmilch annähernd entspricht, sowie
(d) Hydrolyse des standardisierten Milchproduktes aus Schritt (e) unter Zugabe einer solchen Menge an Lactase, dass die noch im Produkt enthaltene Restmenge an Lactose vollständig in Glucose und Galactose gespalten wird.

## Beschreibung

### GEBIET DER ERFINDUNG

Die Erfindung befindet sich auf dem Gebiet der lactosefreien Milcherzeugnisse und betrifft die Erzeugung von Milchprodukten mit gegenüber der Ausgangsmenge verminderten, jedoch definierten Lactosegehalten und weitgehend identischer Mineralienzusammensetzung, die sich in lactosefreie Produkte umwandeln lassen, ohne dabei eine Änderung des Geschmacksprofils der Ausgangsmilch aufzuweisen.

### STAND DER TECHNIK

Neugeborene Säugetiere bilden während ihrer Stillzeit das Enzym Lactase, welches das Disaccharid Milchzucker in die vom Stoffwechsel verwertbaren Zuckerarten D-Galactose und D-Glucose spaltet. Im Laufe der natürlichen Entwöhnung von der Muttermilch sinkt die Aktivität der Lactase auf etwa 5-10 % der Aktivität bei der Geburt. Das gilt für den Menschen und alle anderen Säugetiere. Nur bei Populationen, die seit langer Zeit Milchwirtschaft betreiben, hat sich eine Mutation durchgesetzt, die dazu führt, dass auch noch im Erwachsenenalter genügend Lactase produziert wird (Lactasepersistenz). Vermutlich liegt das daran, dass die höhere Lactaseaktivität einen Selektionsvorteil (Mineralstoffe, Nährwert) für diese Gruppen bot.

Bei mangelhafter Lactaseaktivität gelangt ungespaltener Milchzucker beim Menschen bis in den Dickdarm, wo er von Darmbakterien aufgenommen und vergoren wird. Als Gärungsprodukte entstehen Milchsäure sowie Methan und Wasserstoff. Die Gase führen unter anderem zu Blähungen, die osmotisch aktive Milchsäure zu einem Wassereinstrom in den Darm (osmotischer Diarrhoe).

In Asien und Afrika betrifft die fehlende Lactasepersistenz bzw. Lactoseintoleranz den größten Teil der erwachsenen Bevölkerung (90 % oder mehr), in Westeuropa, Australien und Nordamerika sind es 5-15 % (bei hellhäutigen Menschen). In Deutschland leiden nach Schätzungen 15-25 % der Gesamtbevölkerung an einer Milchzuckerunverträglichkeit. Der Grund für eine Lactoseintoleranz ist ein angeborener Enzymmangel, bei dem die entsprechenden Enzyme fehlen, die den Milchzucker in seine Einzelteile aufspalten und abbauen. In den letzten Jahren ist zumindest das Bewusstsein für einen Zusammenhang der genannten Symptome mit der Anwesenheit von Lactose insbesondere in Milchprodukten stark gewachsen. Dies hat dazu geführt, dass es ein großes Bedürfnis nach lactosearmen oder besser noch lactosefreien Produkten gibt.

Aus dem Stand der Technik sind unterschiedlichste Verfahren bekannt, mit deren Hilfe man Lactose aus Milchprodukten entweder abtrennt und als Nebenprodukt weiterverarbeitet oder durch Zugabe entsprechende Enzyme abbaut.

Gegenstand der EP 1503630 B1 (VALIO) ist beispielsweise ein Verfahren zur Herstellung von lactosefreien Produkten, bei dem die Ausgangsmilch zunächst einer Ultrafiltration unterworfen wird. Das dabei anfallende erste Permeat wird nanofiltriert, wobei die Lactose über das zweite Retentat ausgeschleust wird und die einwertigen Salze (Natrium, Kalium) in das zweite Permeat gelangen. Dieses wird mit Hilfe einer Umkehrosmose aufkonzentriert und das so erhaltene dritte Retentat dem ersten Retentat wieder beigemischt, bevor dieses dann einer Hydrolyse unterworfen wird, um die Lactose enzymatisch abzubauen. Das Verfahren hat indes zwei erhebliche Nachteile: der Lactosegehalt des Retentats, welches hydrolysiert wird, lässt sich nicht steuern, sondern stellt sich aufgrund der Bedingungen in der Ultrafiltration automatisch auf einen sehr niedrigen Wert ein. In der Hydrolyse stehen dann auch nur geringe Mengen an Zucker für die Spaltung zur Verfügung, so dass eine zwar lactosefreie Milch erhalten wird, die jedoch weit weniger süß und geschmacklich ansprechend ist, wie die Ausgangsmilch. Des Weiteren gelangen über den Prozess nur Alkalisalze in die Milch zurück. Um das Geschmacksprofil der Ursprungsmilch wieder einigermaßen zu erreichen, müssen zweiwertige Salze aus anderen Quellen wieder zugesetzt werden. In Summe wird jedenfalls ein Produkt erhalten, welches dem gewünschten Geschmacksprofil der Ausgangsmilch nur angenähert entspricht.

Ein ähnlicher Weg wird in der EP 2207428 B1 (ARLA) vorgeschlagen: hier wird die Milch ebenfalls zunächst einer Ultrafiltration unterworfen, wobei das Permeat dann nanofiltriert wird. Das Permeat aus der Nanofiltration wird mit dem Retentat aus der Ultrafiltration vermischt und anschließend hydrolysiert. Dieses Verfahren weist jedoch bezüglich des Geschmacksprofils der resultierenden Produkte die gleichen Nachteile wie das Valio-Verfahren auf.

Die Aufgabe der vorliegenden Erfindung hat daher darin bestanden, ausgehend von Vollmilch, Magermilch oder standardisierter Milch, welche typisch zwischen 4 und 5 Gew.-% Lactose aufweist, eine lactosefreie Milchzusammensetzung zur Verfügung zu stellen, die jedoch über die gleiche oder die im Wesentlichen gleiche Mineralienzusammensetzung wie die Ausgangsmilch verfügt, so dass deren Geschmacksprofil dem der Ausgangsmilch entspricht.

### BESCHREIBUNG DER ERFINDUNG

Gegenstand der Erfindung ist ein Verfahren zur Herstellung von lactosefreien Milchprodukten, umfassend die folgenden Schritte:
(a) Ultrafiltration einer Ausgangsmilch zur Erzeugung eines ersten Permeats P1 und eines ersten Retentats R1;
(b) Umkehrosmose des ersten Permeats P1 zur Erzeugung eines zweiten Permeats P2 und eines zweiten Retentats R2;
(c) Vermischen des ersten Retentats R1 mit jeweils einer solchen Menge des zweiten Permeats P2 und Milchmineralien, so dass ein standardisiertes Milchprodukt erhalten wird, dessen Gehalt an Proteinen und Mineralien dem der Ausgangsmilch annähernd entspricht; sowie
(d) Hydrolyse des standardisierten Milchproduktes aus Schritt (e) unter Zugabe einer solchen Menge an Lactase, dass die noch im Produkt enthaltene Restmenge an Lactose vollständig in Glucose und Galactose gespalten wird.

Überraschenderweise wurde gefunden, dass das erfindungsgemäße Verfahren das geschilderte Anforderungsprofil vollständig erfüllt. Dabei wird die Milch zunächst in eine proteinreiche/lactosearme und eine proteinarme/lactosereiche Fraktion aufgetrennt, letztere mittels Umkehrosmose zur Gewinnung von Osmosewasser ("Diawasser") aufkonzentriert. Dieses wird in solchen Mengen wieder zugesetzt ("Standardisierung"), dass sich die Zusammensetzung der Ausgangsmilch entweder wieder genau oder doch wieder zumindest angenähert ergibt, die Menge an Lactose jedoch deutlich vermindert ist. Vorzugsweise stellt man bei der Rückvermischung den Lactosegehalt auf etwa ein Viertel des Ausgangswertes ein.

Die über die Umkehrosmose verlorenen Mineralien werden durch Milchmineralien ersetzt. Bei der nachfolgenden Hydrolyse zerfällt die Lactose in ein Molekül Glucose und ein Molekül Galactose. Untersuchungen zur relativen Süßkraft (rS) verschiedener Kohlenhydrate bezogen auf Saccharose (nach Noeske, 1996) ergaben, dass sowohl Glucose (rS=64) als auch Galactose (rS=60) jeweils in etwa die doppelte Süßkraft im Vergleich zu Lactose (rS=30) aufweisen. Reduziert man also die Lactosemenge vor der Hydrolyse auf ein Viertel des Ausgangswertes, entsteht gerade wieder die erforderliche Zuckermenge, mit der die gleiche Süßkraft der Ausgangsmilch erreicht wird. Dadurch schmeckt die Milch nicht süßer als zuvor. Dadurch, dass man der Milch bei der Standardisierung Milchmineralien zusetzt, wird nach der Hydrolyse in Summe ein Produkt erhalten, das zwar lactosefrei ist, sich aber ansonsten in der Zusammensetzung von der Ausgangsmilch nicht unterscheidet und daher den gleichen Geschmackseindruck aufweist.

Selbstverständlich ist es mit Hilfe des Verfahrens ebenfalls möglich, einen sehr niedrigen Lactosegehalt einzustellen - beispielsweise, indem man dem ersten Retentat R1 gar kein oder nur sehr wenig Lactosekonzentrat (Permeat P3) zusetzt. Dementsprechend wird dann nach der Hydrolyse eine ungesüßte, sehr kalorienarme Milch erhalten.

Als lactosefrei sind solche Produkte zu verstehen, die weniger als 0,1 Gew.-% und vorzugsweise weniger als 0,01 Gew.-% Lactose enthalten. Wenn davon die Rede ist, dass die erfindungsgemäßen Produkte einen Gehalt an Proteinen und Mineralien aufweisen, der angenähert dem der Ausgangsmilch entspricht, dann ist damit gemeint, dass die Abweichung bezogen auf den Ausgangswert nicht mehr als 10 % in beide Richtungen beträgt. Umfasst davon ist auch der Fall, dass die Mengen in den erfindungsgemäßen Produkten und in der Ausgangsmilch identisch sind.

### AUSGANGSSTOFFE

Als Ausgangsstoff kommen Vollmilch, Magermilch oder standardisierte Milch mit einem Lactosegehalt im Bereich von etwa 3 bis etwa 5 Gew.-% und vorzugsweise etwa 4 bis etwa 4,5 Gew.-% in Frage. Lactose gehört zur Gruppe der Disaccharide und besteht aus den beiden Molekülen D-Galactose und D-Glucose, die über eine β-1,4-glycosidische Bindung verbunden sind.

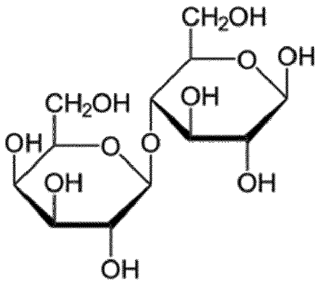

### ULTRAFILTRATION

Im ersten Verfahrensschritt wird die Ausgangsmilch, bei der es sich um Vollmilch, Magermilch oder standardisierte Milch mit einem Lactosegehalt im Bereich von etwa 3 bis etwa 5 Gew.-% und vorzugsweise etwa 4 bis etwa 4,5 Gew.-% handeln kann, in eine proteinreiche und lactosearme sowie eine proteinarme und lactosereiche Fraktion aufgetrennt.

Die Ultrafiltration gehört zu den Filtrationsverfahren aus dem Bereich der Membrantechnik, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch "Cut-off") bei 100 nm oder darüber, spricht man von Mikrofiltration. Liegt die Ausschlussgrenze in dem Bereich zwischen 2 bis 100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt.

Die Ausschlussgrenzen von Ultrafiltrationsmembranen werden auch in Form des NMWC (englisch: Nominal Molecular Weight Cut-Off, auch MWCO, Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des Flux (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

In einer bevorzugten Ausführungsform des erfindungsgemäßen Verfahrens wird die Ultrafiltration unter Zugabe von Diawasser durchgeführt und zwar in einer solchen Menge, dass ein erstes Retentat mit einem Verdünnungsfaktor von etwa 5 bis etwa 20 erhalten und vorzugsweise etwa 8 bis etwa 12 erhalten wird.

Für die Ultrafiltration haben sich Membranen als besonders geeignet erwiesen, die einen Porendurchmesser im Bereich von etwa 1.000 bis etwa 50.000 und vorzugsweise etwa 5.000 bis etwa 25.000 Dalton besitzen. Dem hingegen bevorzugt beispielsweise die Nanofiltration Porendurchmesser im Bereich von 100 bis 1.000 und vorzugsweise etwa 150 bis 800 Dalton.

Der Werkstoff der Filterfläche kann Edelstahl, Polymerwerkstoffe, Keramik, Aluminiumoxid oder textile Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen eingesetzt.

Die Ultrafiltration kann im Sinne der vorliegenden Erfindung "heiß" oder "kalt", d.h. im Temperaturbereich von etwa 6 bis etwa 55 °C durchgeführt werden. Bevorzugt ist es jedoch, bei Temperaturen im niedrigen Bereich von etwa 6 bis etwa 25 °C und insbesondere etwa 8 bis etwa 18 °C zu arbeiten.

### UMKEHROSMOSE

Das erste Permeat P1 der Ultrafiltration ist praktisch frei von Proteinen, enthält jedoch Lactose und Mineralien in gegenüber der Ausgangsmilch praktisch unveränderten Konzentrationen. In der folgenden Umkehrosmose wird die Menge an diesen beiden Komponenten aufkonzentriert.

Die Umkehrosmose oder Reversosmose ist ein physikalisches Verfahren zur Aufkonzentrierung von in Flüssigkeiten gelösten Stoffen, bei der mit Druck der natürliche Osmose-Prozess umgekehrt wird. Das Medium, in dem die Konzentration eines bestimmten Stoffes verringert werden soll, ist durch eine halbdurchlässige (semipermeable) Membran von dem Medium getrennt, in dem die Konzentration erhöht werden soll. Dieses wird einem Druck ausgesetzt, der höher sein muss als der Druck, der durch das osmotische Verlangen zum Konzentrationsausgleich entsteht. Dadurch können die Moleküle des Lösungsmittels gegen ihre "natürliche" osmotische Ausbreitungsrichtung wandern. Das Verfahren drückt sie in das Kompartiment, in dem gelöste Stoffe weniger konzentriert vorliegen.

Die osmotische Membran, die nur die Trägerflüssigkeit (Solvent) durchlässt und die gelösten Stoffe (Solute) zurückhält, muss diesen hohen Drücken standhalten können. Wenn der Druckunterschied das osmotische Gefälle mehr als ausgleicht, passen die Solventmoleküle wie bei einem Filter durch die Membran, während die übrigen Moleküle zurückgehalten werden. Im Gegensatz zu einem klassischen Membranfilter verfügen Osmosemembranen nicht über durchgehende Poren. Vielmehr wandern die Ionen und Moleküle durch die Membran hindurch, indem sie durch das Membranmaterial diffundieren.

Der osmotische Druck steigt mit zunehmendem Konzentrationsunterschied. Wird der osmotische Druck gleich dem angelegten Druck, kommt der Prozess zum Stehen. Es liegt dann ein osmotisches Gleichgewicht vor. Ein stetiger Abfluss des Konzentrats kann das verhindern. Beim Konzentratauslass wird der Druck entweder über einen Druckregler kontrolliert oder über einen Druckaustauscher genutzt, um den im Zulauf des Systems benötigten Druck aufzubauen. Druckaustauscher senken durch Energierückgewinnung sehr effektiv die Betriebskosten einer Umkehrosmoseanlage. Der Energieaufwand pro Kubikmeter Wasser liegt bei 4 bis 9 kWh. Vorzugsweise beträgt der Konzentrierungsfaktor im erfindungsgemäßen Verfahren etwa 2,5 bis etwa 5 und insbesondere etwa 3 bis etwa 4.

Das Auskristallisieren (Ausfallen) der Solute in den Membranen muss verhindert werden. Dies kann durch Zugabe von Antibelagmitteln (engl. *Antiscaling*) oder Säuren erreicht werden. Antibelagmittel sind hier polymere Verbindungen auf Phosphat- oder Maleinsäurebasis, welche die sich bildenden Kristallite umschließen und so verhindern, dass kristalline Ausfällungen auf der Membran entstehen können. Eine Reinigung der Membran kann dennoch erforderlich bleiben. Um Beschädigungen der Membran zu verhindern, können zudem Filter vorgeschaltet werden. Ein Feinfilter kann mechanische, ein Aktivkohlefilter chemische Beschädigungen (z. B. durch Chlor) verhindern.

Bei der Umkehrosmose wird ein zweites Permeat erhalten, das im Wesentlichen nur Wasser darstellt, das zur Verdünnung des ersten Retentats dient, sowie ein zweites Retentat, in dem Lactose und Mineralien konzentriert sind und das eine Trockenmasse in der Größenordnung von etwa 15 bis etwa 20 Gew.-% besitzt. Dieses Produkt wird abgetrennt und kann gegebenenfalls nach Trocknung separat weiterverwendet werden

### MISCHUNG

Der Mischungsschritt dient der Herstellung eines standardisierten Milchproduktes, das nachfolgend durch Hydrolyse vollständig von Lactose befreit wird. Dazu wird dem im ersten Schritt erhaltenen proteinreichen ersten Retentat definierte Mengen des zweiten Permeats und Mineralien zugesetzt. Ziel ist es insbesondere, ein Produkt zu erhalten, das gegenüber der Ausgangsmilch nur noch etwa 50 % Lactose aufweist, so dass nach der Hydrolyse wieder der gleiche Süßungsgrad erreicht wird. Auch die Zugabe der Mineralien wird mit dem Ziel verfolgt, wieder die ursprüngliche Salzkonzentration und Salzzusammensetzung einzustellen, damit der Geschmackseindruck der Ursprungsmilch erhalten bleibt.

Das erfindungsgemäße Verfahren ist daher des Weiteren in einer spezifischen Ausgestaltungsform dadurch gekennzeichnet, dass man dem ersten Retentat R1
(i) eine solche Menge des zweiten Permeats P2 zusetzt, so dass sich durch die Verdünnung eine Proteinkonzentration von etwa 3,5 bis etwa 4,0 Gew.-% - bezogen auf die resultierende Standardmilch - ergibt, und/oder
(ii) eine Solche Menge Milchmineralien zusetzt, so dass sich eine Mineralienkonzentration von etwa 0,6 bis etwa 1,0 Gew.-% - bezogen auf die resultierende Standardmilch ergibt

### HYDROLYSE

Zum Abbau in die beiden Zuckerkomponenten wird im letzten Verfahrensschritt Lactose mit dem Enzym Lactase (auch als LPH oder *LCT* bezeichnet) versetzt. Die Hydrolyse erfolgt vorzugsweise in einem Fermenter im Batchverfahren. Es hat sich als vorteilhaft erwiesen, eine wirksame Enzymkonzentration von etwa 180.000 bis 250.000 FCC-Einheiten Lactase pro kg zu hydrolysierender Lactose einzusetzen und die Reaktion bei Temperaturen im Bereich von etwa 6 bis etwa 40 °C und vorzugsweise im Bereich von 6 bis 35°C sowie einem neutralen pH-Wert durchzuführen. Alternativ kann auch die Dosage der Laktase direkt in die Endverpackung über ein z.B. Tetra FlexDos-System erfolgen.

### REFERENZZEICHEN IN DER ABBILDUNG

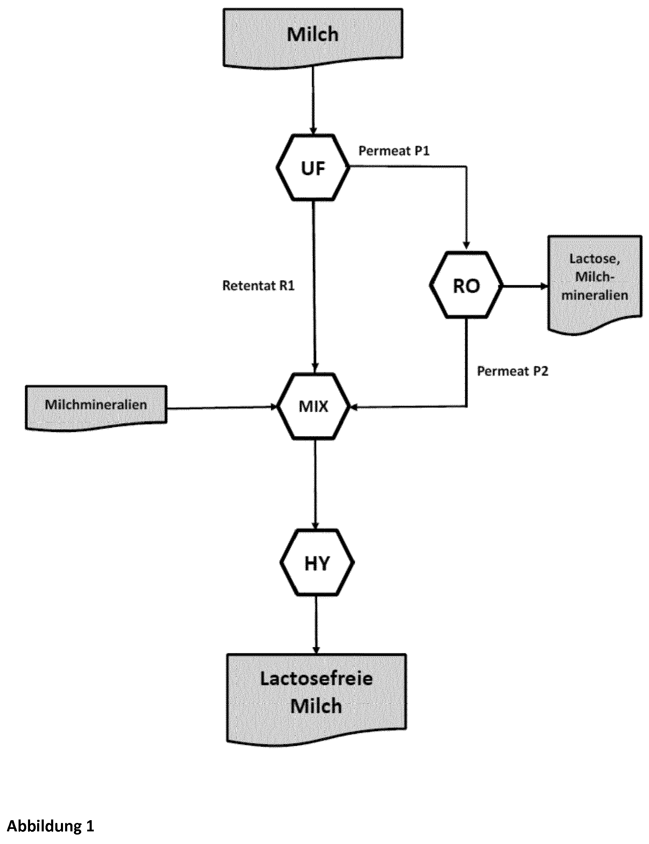

Das erfindungsgemäße Verfahren wird schematisch in **Abbildung 1** zusammengefasst. Dabei bedeuten die Abkürzungen:
- UF: = Ultrafiltration
- RO: = Umkehrosmose
- MIX: = Vermischung
- HY: = Hydrolyse

### BEISPIELE

### BEISPIEL 1

100 kg Milch folgender Zusammensetzung

| **MILCH** | **Menge [Gew.-%]** |
|---|---|
| Lactose | 4,0 |
| Proteine | 3,5 |
| Mineralien | 0,8 |

Die Rohmilch wurde bei 10°C einer Ultrafiltration mit einer Membran mit einer Porenweite von 20.000 Dalton und einen Konzentrierungfaktor 2,1 unterworfen, wobei als Zwischenprodukt ein proteinreiches erstes Retentat R1 erhalten wurde, welches die folgende Zusammensetzung aufwies:

| **RETENTAT R1** | **Menge [Gew.-%]** |
|---|---|
| Lactose | 4,0 |
| Proteine | 7,1 |
| Mineralien | 0,9 |

Gleichzeitig wurde ein proteinarmes erstes Permeat P1 erhalten, welches die folgende Zusammensetzung aufwies:

| **PERMEAT P1** | **Menge [Gew.-%]** |
|---|---|
| Lactose | 4,0 |
| Proteine | 0,2 NPN |
| Mineralien | 0,7 |

Das erste Permeat P1 wurde bei 10 °C einer Umkehrosmose mit einem Konzentrierungsfaktor 4,0 unterworfen. Dabei wurde ein zweites Permeat P2 erhalten, welches praktisch nur aus Wasser bestand. Das bei der Umkehrosmose erhaltene zweite kohlenhydratreiche Retentat R2 wies eine Trockenmasse von etwa 19,6 Gew.-% und folgende Zusammensetzung auf:

| **RETENTAT R2** | **Menge [Gew.-%]** |
|---|---|
| Lactose | 16,0 |
| Proteine | 0,8 |
| Mineralien | 2,8 |

Anschließend wurde das Retentat R1 mit einer solchen Menge des Permeats P2 versetzt sowie Milchmineralien versetzt, dass eine standardisierte Milch der folgenden Zusammensetzung resultierte:

| **STANDARDMILCH** | **Menge [Gew.-%]** |
|---|---|
| Lactose | 2,0 |
| Proteine | 3,55 |
| Mineralien | 0,8 |

Die standardisierte Milch wies demnach den annähernd gleichen Gehalt an Proteinen sowie die annähernd gleiche Menge und Zusammensetzung an Mineralien wie die Ausgangsmilch auf.

Abschließend wurde die Standardmilch in einem Fermenter bei 10 °C auf pH = 6,6 eingestellt und mit einer solchen Menge Lactase versetzt, dass sich eine Konzentration von etwa 200.000 FCC Einheiten/kg Lactose ergab. Nach einer Hydrolysezeit von etwa 18 Stunden wurde ein Produkt erhalten, das die folgende Zusammensetzung aufwies:

| **HYDROLOYSEPRODUKT** | **Menge [Gew.-%]** |
|---|---|
| Lactose | n.n. |
| Glucose | 2,0 |
| Galactose | 2,0 |
| Proteine | 3,55 |
| Mineralien | 0,8 |

Diese hydrolysierte Standardmilch enthielt nur die entsprechende Menge an Glucose und Galactose, mit der die gleiche Süßkraft der Ausgangsmilch erzielt wurde. Auf diese Weise wurde eine praktisch lactosefreie Milch erhalten, die den gleichen Süßungsgrad und das gleiche Geschmacksprofil wie die ursprüngliche Milch aufwies.

## Patentansprüche

1. Verfahren zur Herstellung von lactosefreien Milchprodukten, umfassend die folgenden Schritte:
(a) Ultrafiltration einer Ausgangsmilch zur Erzeugung eines ersten Permeats P1 und eines ersten Retentats R1;
(b) Umkehrosmose des ersten Permeats P1 zur Erzeugung eines zweiten Permeats P2 und eines zweiten Retentats R2;
(c) Vermischen des ersten Retentats R1 mit jeweils einer solchen Menge des zweiten Permeats P2 und Milchmineralien, so dass ein standardisiertes Milchprodukt erhalten wird, dessen Gehalt an Proteinen und Mineralien dem der Ausgangsmilch annähernd entspricht, sowie
(d) Hydrolyse des standardisierten Milchproduktes aus Schritt (e) unter Zugabe einer solchen Menge an Lactase, dass die noch im Produkt enthaltene Restmenge an Lactose vollständig in Glucose und Galactose gespalten wird.

2. Verfahren nach Anspruch 1, **dadurch gekennzeichnet, dass** man als Ausgangsmilch Vollmilch, Magermilch oder Standardmilch einsetzt.

3. Verfahren den Ansprüchen 1 und/oder 2, **dadurch gekennzeichnet, dass** man eine Ausgangsmilch einsetzt, die einen Lactosegehalt im Bereich von etwa 3 bis etwa 5 Gew.-% aufweist.

4. Verfahren nach mindestens einem der Ansprüche 1 bis 3, **dadurch gekennzeichnet, dass** man die Ultrafiltration durch Zugabe von Diawasser durchführt und eine solche Menge Diawasser zugibt, dass ein erstes Retentat R1 mit einem Verdünnungsfaktor von etwa 0 bis etwa 20 erhalten wird.

5. Verfahren nach Anspruch 4, **dadurch gekennzeichnet, dass** man eine solche Menge Diawasser zugibt, dass ein erstes Retentat R1 mit einem Verdünnungsfaktor von etwa 0 bis etwa 12 erhalten wird.

6. Verfahren nach mindestens einem der Ansprüche 1 bis 5, **dadurch gekennzeichnet, dass** man die Ultrafiltration mit einer Membran durchführt, die einen Porendurchmesser von etwa 1.000 bis etwa 50.000 aufweist.

7. Verfahren nach Anspruch 6, **dadurch gekennzeichnet, dass** man die Ultrafiltration mit einer Membran durchführt, die einen Porendurchmesser von etwa 5.000 bis etwa 25.000 aufweist.

8. Verfahren nach mindestens einem der Ansprüche 1 bis 7, **dadurch gekennzeichnet, dass** man die Ultrafiltration mit einer Spiralwickelmembran durchführt.

9. Verfahren nach mindestens einem der Ansprüche 1 bis 8, **dadurch gekennzeichnet, dass** man die Ultrafiltration bei Temperaturen im Bereich von etwa 6 bis etwa 55 °C durchführt.

10. Verfahren nach Anspruch 9, **dadurch gekennzeichnet, dass** man die Ultrafiltration bei Temperaturen im Bereich von etwa 6 bis etwa 25 °C durchführt.

11. Verfahren nach mindestens einem der Ansprüche 1 bis 10, **dadurch gekennzeichnet, dass** man die Umkehrosmose mit einem Konzentrierungsfaktor von etwa 2,5 bis etwa 5 durchführt.

12. Verfahren nach mindestens einem der Ansprüche 1 bis 11, **dadurch gekennzeichnet, dass** man dem ersten Retentat R1 eine solche Menge des Permeats P2 zusetzt, dass sich eine Konzentration an Laktose von etwa Faktor 0,4 - 0,6 des Ausgangslaktosewertes einstellt.

13. Verfahren nach Anspruch 12, **dadurch gekennzeichnet, dass** man dem ersten Retentat R1 eine solche Menge des zweiten Permeats P2 zusetzt, dass sich eine Konzentration an Laktose von etwa Faktor 0,45 - 0,55 des Ausgangslaktosewertes einstellt.

14. Verfahren nach mindestens einem der Ansprüche 1 bis 13, **dadurch gekennzeichnet, dass** man dem ersten Retentat R1 eine solche Menge des zweiten Permeats P2 zusetzt, so dass sich durch die Verdünnung eine Proteinkonzentration von etwa 3,5 bis etwa 4,0 Gew.-% - bezogen auf die resultierende Standardmilch - ergibt.

15. Verfahren nach mindestens einem der Ansprüche 1 bis 14, **dadurch gekennzeichnet, dass** man dem ersten Retentat R1 eine solche Menge des zweiten Permeats P2 sowie an Milchmineralien zusetzt, dass sich eine Mineralienkonzentration von etwa 0,6 bis etwa 1,0 Gew.-% - bezogen auf die resultierende Standardmilch - ergibt.
